# FASCICULE DE BREVET EUROPEEN

(11) **EP 3 917 819 B1**
(45) Date de publication et mention de la délivrance du brevet: **19.11.2025**
(21) Numéro de dépôt: 20700720.4
(22) Date de dépôt: 17.01.2020
(51) Int. Cl.: B62D 25/20, B62D 65/02

(54) **VÉHICULE DOTÉ D'ÉLÉMENTS DE RENFORT DE TRAVERSES LATÉRALES AVANT**
FAHRZEUG MIT VORDEREN QUERTRÄGERVERSTÄRKUNGSELEMENTEN
VEHICLE PROVIDED WITH FRONT LATERAL CROSS-MEMBER REINFORCEMENT ELEMENTS

(30) Priorité: 31.01.2019 FR 1900963
(43) Date de publication de la demande: 08.12.2021
(73) Titulaire: Renault s.a.s, 92100 Boulogne Billancourt (FR)
(72) Inventeur: DELORD, Christian, 78910 ORGERUS (FR)
(74) Mandataire: Renault Group
(86) Numéro de dépôt international: PCT/EP2020/051159
(87) Numéro de publication internationale: WO 2020/156838

(56) Documents cités:
- WO-A1-2012/020192
- DE-A1- 102004 061 708
- FR-A1- 2 839 491
- FR-B1- 2 839 491

## Description

L'invention se rapporte à un véhicule doté d'éléments de renfort de traverses latérales avant.

Ces renforts trouvent leur justification essentiellement lors du procédé de fabrication d'un véhicule.

Afin de bien comprendre le positionnement des différentes pièces impliquées dans un véhicule selon l'invention, la description est réalisée en faisant référence à un repère orthonormé direct XYZ dans lequel X est un axe longitudinal avant-arrière du véhicule orienté vers l'arrière, Y est un axe transversal orienté vers la droite du véhicule et Z est un axe vertical dirigé vers le haut.

Un véhicule comporte généralement deux traverses latérales, situées dans une zone avant dudit véhicule et alignées suivant un axe transversal Y du véhicule. Lors des différentes phases d'assemblage et de montage d'un véhicule en usine, celui-ci est en appui sur deux cales, au niveau de deux trous pilotes qui assurent une mise en référence géométrique de la plateforme. Ces deux trous pilotes sont réalisés dans chacune des traverses latérales avant dudit véhicule. En effet, des pilotes sous forme de pions verticaux épaulés viennent se loger dans les trous pilotes des traverses latérales afin d'assurer la mise en géométrie de la plateforme ; ils assurent par ailleurs le soutien du véhicule durant le processus de fabrication. Les deux traverses doivent donc supporter la totalité du poids du véhicule, sans subir de déformations plastiques. Etant donné le niveau d'effort appliqué aux deux traverses, il est nécessaire de renforcer localement ces traverses latérales, pour éviter qu'elles ne se déforment plastiquement. Ce renforcement est réalisé par le biais d'éléments de renfort fixés aux deux traverses.

Or, actuellement, un inconvénient majeur de ces éléments de renfort est qu'ils ont une masse importante, comprise le plus souvent entre 0.3kg et 0.4Kg, et qu'ils augmentent donc significativement la masse du véhicule.

Le document FR 2 839 491 A1 décrit un véhicule comprenant deux traverses latérales avant conformes au préambule de la revendication 1.

Un véhicule selon l'invention présente des éléments de renfort des traverses latérales avant, dont la masse a été réduite grâce à une optimisation de leur géométrie, tout en conservant intacte leur propriété de tenue mécanique lors du soutien dudit véhicule.

L'invention a pour objet un véhicule comprenant deux traverses latérales avant comportant chacune une première paroi horizontale dotée de deux trous pilotes et une troisième paroi qui est inclinée par rapport à la première paroi, et deux éléments de renforts destinés chacun à venir se fixer à l'une desdites traverses latérales.

Selon l'invention, chaque élément de renfort comprend un corps principal reliant la première paroi et la troisième paroi en étant incliné d'un angle α par rapport à ladite première paroi, l'élément de renfort étant fixé à la fois à la première paroi et à la troisième paroi. De cette manière, grâce à une géométrie particulière de l'élément de renfort et à un positionnement judicieux de celui-ci sur la traverse latérale avant, il est possible de diminuer significativement les dimensions de celui-ci et donc sa masse, tout en préservant un certain niveau de résistance mécanique lors de l'assemblage d'un véhicule le long d'une chaine de montage. Cet élément de renfort est fixé à la traverse en jouant le rôle d'une entretoise entre la première paroi et la troisième paroi, et de manière à ne pas empiéter sur les trous pilotes. Il est donc conformé pour être placé autour de ces trous pilotes. Avantageusement, l'élément de renfort comprend au moins un point de fixation à la première paroi et au moins un point de fixation à la troisième paroi. Chaque point de fixation de l'élément de renfort à une paroi de la traverse avant, peut être réalisé par tout moyen, comme par exemple par soudure ou avec des vis. L'adjectif « horizontale » appliquée à la première paroi de la traverse horizontale doit être considérée comme si le véhicule reposait sur un sol horizontal. Le corps principal de l'élément de renfort est préférentiellement plan. Les trous pilotes sont destinés à recevoir des pions verticaux, qui vont jouer le rôle de cales aptes à supporter le véhicule et à le maintenir dans une position horizontale.

Selon une caractéristique possible de l'invention, la troisième paroi est une paroi arrière de la traverse latérale avant. Avantageusement, la troisième paroi arrière s'étend selon une direction transversale Y du véhicule.

Selon une caractéristique possible de l'invention, la première paroi et la troisième paroi sont perpendiculaires. Autrement dit, la troisième paroi s'étend dans un plan vertical.

Selon une caractéristique possible de l'invention, l'angle α est compris entre 20° et 50°. En effet, l'élément de renfort est particulièrement efficace lorsque son corps principal est incliné par rapport à la première paroi, dans cette gamme d'angle.

Selon une caractéristique possible de l'invention, l'élément de renfort comprend deux points de fixation à la première paroi qui sont alignés suivant un axe horizontal, et deux points de fixation à la troisième paroi qui sont alignés suivant un axe horizontal. Pour cette configuration, l'élément de renfort est solidement arrimé à la première paroi et à la troisième paroi de la traverse latérale avant. La présence de deux points de fixation sur chaque paroi, empêche ledit élément de renfort de pivoter relativement auxdites parois, comme dans le cas où il n'y aurait qu'un seul point de fixation.

Selon l'invention, l'élément de renfort est prolongé par une patte de fixation s'étendant entre les deux trous pilotes. Cette patte de fixation est préférentiellement plane et de faible épaisseur, de manière à établir un contact étendu avec une surface de la première paroi de la traverse avant.

Selon une caractéristique possible de l'invention, l'élément de renfort comprend un point de fixation à la première paroi, qui est situé sur la patte de fixation. Cette patte de fixation accroit la surface de contact entre l'élément de renfort et la première paroi, et contribue ainsi à stabiliser la position dudit élément de renfort, relativement à la traverse latérale avant.

Selon une caractéristique possible de l'invention, chaque élément de renfort est en métal.

Selon une caractéristique possible de l'invention, l'élément de renfort est fixé à la première paroi et à la troisième paroi, par des points de soudure. Les points de soudure présentent l'avantage d'être peu encombrants, et de ne nécessiter aucune structure particulière d'accueil, comme par exemple un trou fileté dans le cas d'une vis.

L'invention a pour autre objet un élément de renfort pour la réalisation d'un véhicule conforme à l'invention.

Selon l'invention, l'élément de renfort comprend un corps principal plan prolongé par une patte de fixation plane qui est inclinée par rapport audit corps, le corps comprenant une nervure centrale qui est alignée sur la patte de fixation et qui sépare deux rainures parallèles. La présence de la nervure et des deux rainures renforce la tenue mécanique de l'élément de renfort, qui peut alors soulager efficacement la traverse latérale avant, des efforts engendrés par le dépôt du véhicule sur des pions pilotes de support.

Un véhicule selon l'invention présente l'avantage de pouvoir être soutenu efficacement sur des cales ayant la forme de pions verticaux, tout en demeurant léger grâce à une géométrie particulière des éléments de renfort et à un positionnement judicieux de ceux-ci sur les traverses latérales avant dudit véhicule. Il a de plus l'avantage de ne pas avoir eu à subir de modifications structurelles de fond pour parvenir à ce résultat. Il présente enfin l'avantage de conserver un encombrement constant par rapport aux véhicules existants.

On donne ci-après une description détaillée d'un mode de réalisation préféré d'un véhicule selon l'invention, en se référant aux figures suivantes :
[Fig. 1] est une vue en perspective d'un plancher de la structure d'un véhicule montrant le positionnement des deux traverses latérales avant,
[Fig. 2] est une vue agrandie d'une zone de la figure 1 comportant une traverse latérale avant,
[Fig. 3] est une vue en perspective agrandie d'une traverse latérale avant et d'un élément de renfort d'un véhicule selon l'état de la technique,
[Fig. 4] est une vue de face de la partie avant de la structure de véhicule de la figure 1,
[Fig. 5] est une vue en perspective d'un assemblage d'une traverse avant et d'un élément de renfort d'un véhicule selon l'état de la technique,
[Fig. 6] est une vue en perspective d'un assemblage d'une traverse avant et d'un élément de renfort d'un véhicule selon l'invention,
[Fig. 7] est une vue de côté d'un assemblage d'une traverse avant et d'un élément de renfort d'un véhicule selon l'invention,
[Fig. 8] est une vue en perspective sous un autre angle d'une zone de l'assemblage de la figure 5,
[Fig. 9] est une vue en coupe selon le plan A-A de la figure 7, d'un élément de renfort d'un véhicule selon l'invention.

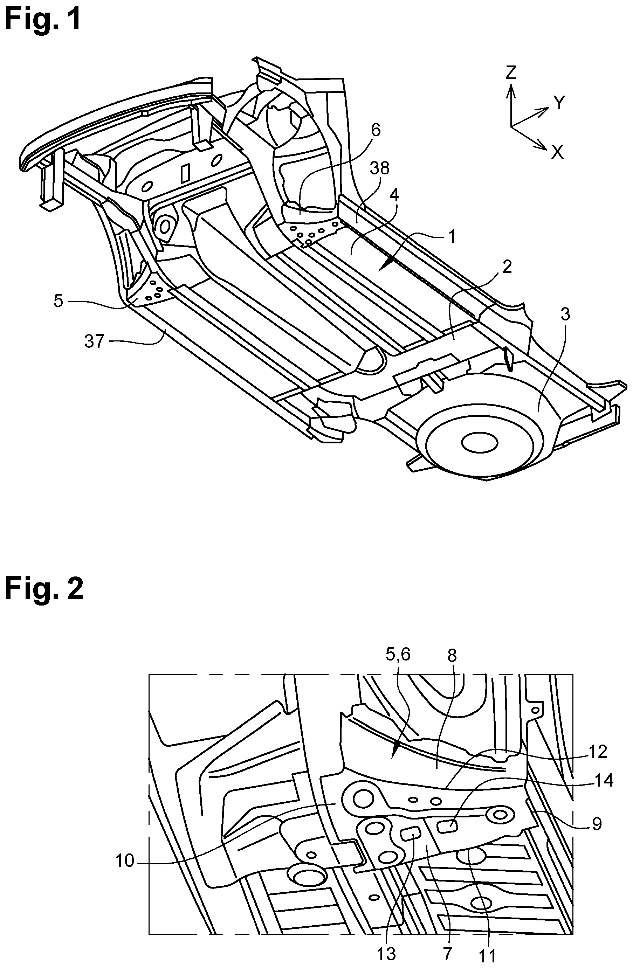

En se référant à la figure 1, une structure de véhicule 1 comprend généralement un plancher 1, dont une partie arrière 2 est prolongée par un logement 3 destiné à loger une roue de secours, et dont une zone avant 4 comprend deux traverses latérales 5, 6. Ces deux traverses latérales 5, 6 sont alignées suivant un axe transversal Y du véhicule, et sont positionnées de manière à affleurer un bord 37, 38 longitudinal et latéral du véhicule, en ménageant entre elles une distance.

En se référant à la figure 2, chaque traverse latérale 5, 6 comporte une première paroi plane 7 s'étendant dans un plan sensiblement horizontal lorsque le véhicule est placé sur un sol horizontal, une deuxième paroi plane 8 avant s'étendant dans un plan vertical et une troisième paroi plane arrière 30 s'étendant également dans un plan vertical. La première paroi plane 7 est bordé par deux bords parallèles 9, 10 dont l'un 9 est plus court que l'autre 10, par un troisième bord 11 reliant lesdits deux bords parallèles 9, 10 en étant perpendiculaire à ceux-ci, et par un quatrième bord 12 reliant ces deux bords parallèles 9, 10 en étant incliné par rapport audit troisième bord 11. La deuxième paroi plane 8 prend naissance au niveau de ce quatrième bord 12 et s'étend vers le haut dans un plan vertical suivant une direction situé entre un axe longitudinal X du véhicule et un axe transversal Y de celui-ci. La troisième paroi plane arrière 30 prend naissance au niveau du troisième bord 11 et s'étend vers le haut dans un plan vertical s'étendant suivant un axe transversal Y de celui-ci. La première paroi 7 comprend deux trous pilotes 13, 14 destinés à recevoir une cale sous la forme d'un pion cylindrique 15 qui est extérieur au véhicule et qui s'étend suivant un axe vertical. Autrement dit, le véhicule 1 est amené à reposer sur des cales 15 venant s'insérer dans les trous pilotes 13, 14 de chaque traverse latérale 5, 6.

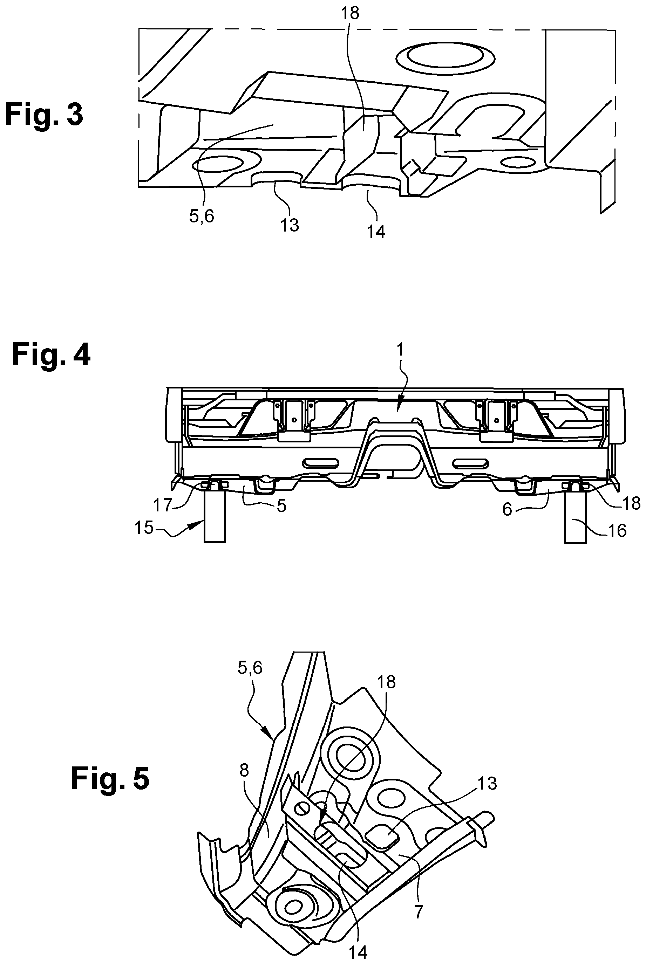

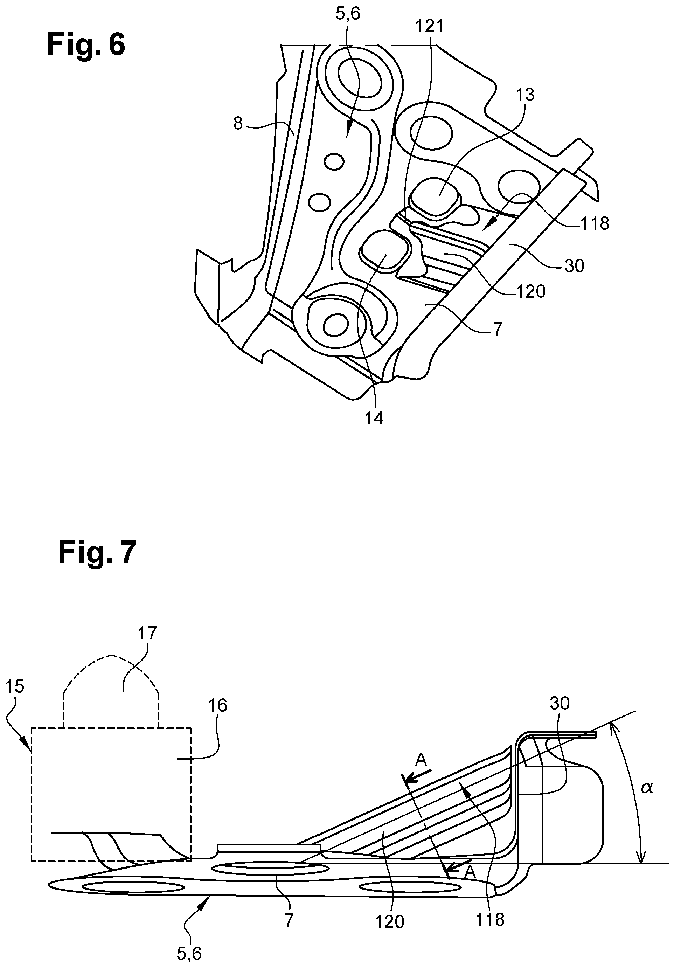

En se référant aux figures 4 et 7, chaque pion cylindrique 15 comprend une embase 16 cylindrique élargie, prolongée par un plot central arrondi 17, dont le diamètre est inférieur à celui de ladite embase 16. Lorsque le véhicule 1 repose sur ces pions 15, le plot central 17 a complétement été introduit dans le trou 13, 14, et l'embase élargie 16 vient en butée contre la première paroi plane 7 de la traverse latérale avant 5, 6 délimitant le trou 13, 14.

En se référant aux figures 3, 4 et 5, sur les véhicules de l'état de la technique, un élément de renfort 18 est fixé à chaque traverse latérale 5, 6 avant, afin de renforcer ladite traverse 5, 6 et empêcher que celle-ci ne subisse une déformation plastique sous l'effet du poids du véhicule 1. Cet élément de renfort 18 qui est positionné dans le prolongement du trou pilote 13, 14 doit assurer un dégagement suffisant sur le dessus de la traverse 5, 6, pour permettre le passage du pion 15. Or, cette contrainte de passage nécessite la réalisation d'un élément de renfort 18 devant posséder une certaine hauteur, et donc une certaine masse, qui est incompatible avec un allègement du véhicule.

Afin de pallier ce problème de masse, la géométrie de l'élément de renfort 118 ainsi que son positionnement sur la traverse latérale 5, 6 ont été modifiées.

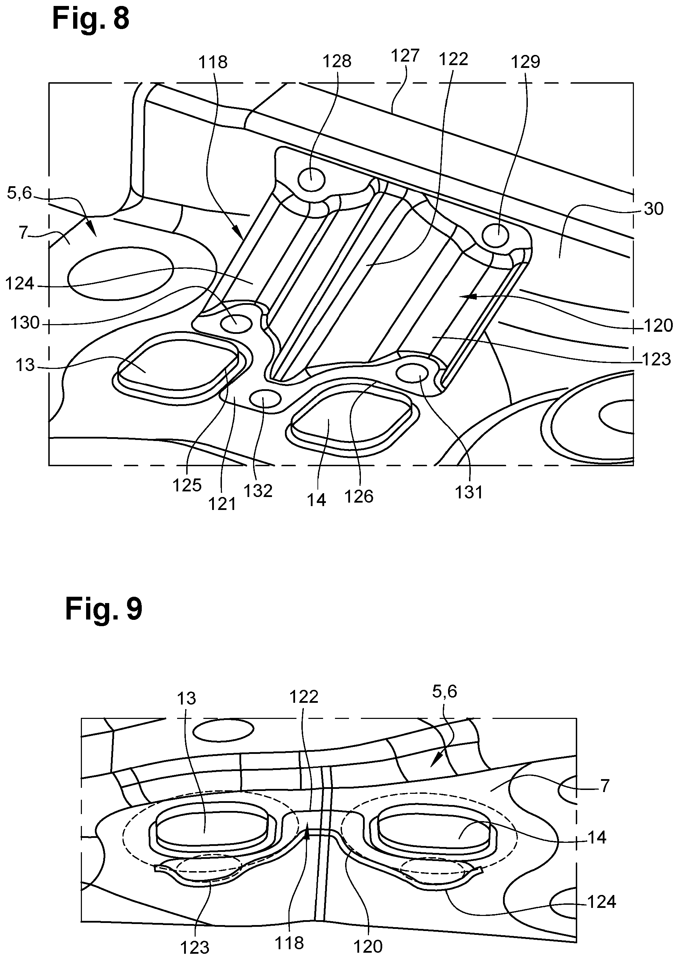

De cette manière, en se référant aux figures 6, 7, 8 et 9, l'élément de renfort 118 dans un véhicule selon l'invention, comprend un corps principal 120 plan prolongé par une patte de fixation 121 centrale. Le corps central 120 comprend une nervure centrale 122 rectiligne, bordée de chaque côté par une rainure 123, 124 rectiligne, lesdites rainures 123, 124 s'étendant parallèlement à ladite nervure centrale 122. Le corps principal 120 a un contour rectangulaire, et la patte de fixation 121 émerge d'un bord 126 dudit corps 120, dans le prolongement de la nervure centrale 122. Le corps principal 120 est inscrit dans un plan qui est incliné par rapport au plan dans lequel est inscrit la patte de fixation 121.

En se référant aux figures 6, 7 et 8, l'élément de renfort 118 est fixé à la traverse avant 5, 6, de sorte que la patte de fixation 121 soit au contact de la première paroi 7 de la traverse avant 5, 6 au niveau d'une zone 125 séparant les deux trous pilotes 113, 114, que le bord 127 du corps principal 120 qui est opposé au bord 126 duquel émerge la patte de fixation 121 soit au contact de la troisième paroi 30 arrière de ladite traverse avant 5, 6, et que le corps principal 120 fasse un angle α avec la première paroi 7.

L'élément de renfort 118 est avantageusement métallique, et le corps principal 120 possède deux points de fixation 128, 129 à la troisième paroi 30, qui sont alignés selon un axe horizontal, et deux points de fixation 130, 131 à la première paroi 7 et qui sont également alignés selon un axe horizontal. L'élément de renfort 118 comporte également un point de fixation 132 à la première paroi 7, au niveau de la patte de fixation 121. Tous ces points de fixation 128, 129, 130, 131, 132 sont avantageusement réalisés par soudure. Ainsi positionné, l'élément de renfort 118 sert d'entretoise entre la première paroi 7 et la troisième paroi 30 de la traverse avant 5, 6. L'angle α est avantageusement compris entre 20° et 50°.

Grâce à cette nouvelle géométrie de l'élément de renfort 118 et grâce au nouveau positionnement dudit élément de renfort sur la traverse avant 5, 6, la masse de cet élément de renfort 118 peut être divisée par trois par rapport à la masse des éléments de renfort 18 existants, et le gain en masse du véhicule peut atteindre quelques centaines de grammes.

Il est à noter que sur la figure 7 le pion pilote 15 n'est pas représenté à son juste emplacement par rapport à la traverse latérale avant 5, 6. Il est juste présent à un endroit arbitraire, pour permettre d'évaluer ses dimensions par rapport à l'élément de renfort 118 et à la traverse latérale avant.

L'élément de renfort 118 est réalisé dans une pièce de tôlerie issue d'emboutissage.

L'élément de renfort 118 fixé à la première paroi 7 et à la troisième paroi 30 est agencé en étant suspendu entre ces parois à la façon d'un pont ou arc-boutant. Un passage est préservé sous l'élément de renfort.

## Revendications

1. Véhicule comprenant deux traverses latérales (5, 6) avant comportant chacune une première paroi (7) horizontale dotée de deux trous pilotes (13, 14) et une troisième paroi (30) qui est inclinée par rapport à la première paroi (8), et deux éléments de renforts (18, 118) destinés chacun à venir se fixer à l'une desdites traverses latérales (5, 6), chaque élément de renfort (118) comprenant un corps principal (120) reliant la première paroi (7) et la troisième paroi (30) en étant incliné d'un angle α par rapport à ladite première paroi (7), et l'élément de renfort (118) étant fixé à la fois à la première paroi (7) et à la troisième paroi (30), **caractérisé en ce que** l'élément de renfort (118) est prolongé par une patte de fixation (121) s'étendant entre les deux trous pilotes (13, 14).

2. Véhicule selon la revendication 1, **caractérisé en ce que** la troisième paroi (30) est une paroi arrière de la traverse latérale avant (5, 6).

3. Véhicule selon l'une quelconque des revendications 1 ou 2, **caractérisé en ce que** la première paroi (7) et la troisième paroi (30) sont perpendiculaires.

4. Véhicule selon la revendication 3, **caractérisé en ce que** l'angle α est compris entre 20° et 50°.

5. Véhicule selon l'une quelconque des revendications 1 à 4, **caractérisé en ce que** l'élément de renfort (118) comprend deux points de fixation (130, 131) à la première paroi (7) qui sont alignés suivant un axe horizontal, et deux points de fixation (128, 129) à la troisième paroi (30) qui sont alignés suivant un axe horizontal.

6. Véhicule selon l'une quelconque des revendications 1 à 5, **caractérisé en ce que** l'élément de renfort (118) comprend un point de fixation (132) à la première paroi (7), qui est situé sur ladite patte de fixation (121).

7. Véhicule selon l'une quelconque des revendications 1 à 6, **caractérisé en ce que** chaque élément de renfort (118) est en métal.

8. Véhicule selon l'une quelconque des revendications 1 à 7, **caractérisé en ce que** l'élément de renfort (118) est fixé à la première paroi (7) et à la troisième paroi (30) par des points (128, 129, 130, 131, 132) de soudure.

9. Elément de renfort (118) pour la réalisation d'un véhicule conforme à l'une quelconque des revendications 1 à 8, **caractérisé en ce qu'**il comprend un corps principal (120) plan prolongé par une patte de fixation (121) plane qui est inclinée par rapport audit corps (120), et **en ce que** ledit corps (120) comprend une nervure centrale (122) qui est alignée sur la patte de fixation (121) et qui sépare deux rainures parallèles (123, 124).

## Patentansprüche

1. Fahrzeug, beinhaltend zwei vordere Querträger (5, 6), die jeweils eine erste horizontale Wand (7), die über zwei Pilotlöcher (13, 14) verfügt, und eine dritte Wand (30), die in Bezug auf die erste Wand (8) geneigt ist, umfassen, und zwei Verstärkungselemente (18, 118), die jeweils dazu bestimmt sind, an einem der Querträger (5, 6) befestigt zu werden, wobei jedes Verstärkungselement (118) einen Hauptkörper (120) beinhaltet, der die erste Wand (7) und die dritte Wand (30) verbindet und dabei in Bezug auf die erste Wand (7) um einen Winkel α geneigt ist, und wobei das Verstärkungselement (118) sowohl an der ersten Wand (7) als auch an der dritten Wand (30) befestigt ist, **dadurch gekennzeichnet, dass** das Verstärkungselement (118) durch eine Befestigungslasche (121) verlängert wird, die sich zwischen den zwei Pilotlöchern (13, 14) erstreckt.

2. Fahrzeug nach Anspruch 1, **dadurch gekennzeichnet, dass** die dritte Wand (30) eine hintere Wand des vorderen Querträgers (5, 6) ist.

3. Fahrzeug nach einem der Ansprüche 1 oder 2, **dadurch gekennzeichnet, dass** die erste Wand (7) und die dritte Wand (30) senkrecht zueinander sind.

4. Fahrzeug nach Anspruch 3, **dadurch gekennzeichnet, dass** der Winkel α zwischen 20° und 50° beträgt.

5. Fahrzeug nach einem der Ansprüche 1 bis 4, **dadurch gekennzeichnet, dass** das Verstärkungselement (118) zwei Befestigungspunkte (130, 131) an der ersten Wand (7), die entlang einer horizontalen Achse ausgerichtet sind, und zwei Befestigungspunkte (128, 129) an der dritten Wand (30), die entlang einer horizontalen Achse ausgerichtet sind, beinhaltet.

6. Fahrzeug nach einem der Ansprüche 1 bis 5, **dadurch gekennzeichnet, dass** das Verstärkungselement (118) einen Befestigungspunkt (132) an der ersten Wand (7) beinhaltet, der sich an der Befestigungslasche (121) befindet.

7. Fahrzeug nach einem der Ansprüche 1 bis 6, **dadurch gekennzeichnet, dass** jedes Verstärkungselement (118) aus Metall ist.

8. Fahrzeug nach einem der Ansprüche 1 bis 7, **dadurch gekennzeichnet, dass** das Verstärkungselement (118) durch Schweißpunkte (128, 129, 130, 131, 132) an der ersten Wand (7) und an der dritten Wand (30) befestigt ist.

9. Verstärkungselement (118) zur Herstellung eines Fahrzeugs nach einem der Ansprüche 1 bis 8, **dadurch gekennzeichnet, dass** es einen ebenen Hauptkörper (120) beinhaltet, der durch eine ebene Befestigungslasche (121) verlängert wird, die in Bezug auf den Körper (120) geneigt ist, und dass der Körper (120) eine mittlere Rippe (122) beinhaltet, die auf die Befestigungslasche (121) ausgerichtet ist und zwei parallele Rillen (123, 124) trennt.

## Claims

1. Vehicle comprising two front lateral crossmembers (5, 6) each having a first horizontal wall (7) provided with two pilot holes (13, 14) and a third wall (30), which is inclined relative to the first wall (8), and two reinforcement elements (18, 118) each intended to be fastened to one of said lateral crossmembers (5, 6), each reinforcement element (118) comprising a main body (120) connecting the first wall (7) and the third wall (30) and being inclined by an angle α relative to said first wall (7), and the reinforcement element (118) being fastened both to the first wall (7) and to the third wall (30), **characterized in that** the reinforcement element (118) is extended by a fastening lug (121) extending between the two pilot holes (13, 14).

2. Vehicle according to Claim 1, **characterized in that** the third wall (30) is a rear wall of the front lateral crossmember (5, 6).

3. Vehicle according to either one of Claims 1 and 2, **characterized in that** the first wall (7) and the third wall (30) are perpendicular.

4. Vehicle according to Claim 3, **characterized in that** the angle α is between 20° and 50°.

5. Vehicle according to any one of Claims 1 to 4, **characterized in that** the reinforcement element (118) comprises two fastening points (130, 131), which are aligned along a horizontal axis, for fastening to the first wall (7) and two fastening points (128, 129), which are aligned along a horizontal axis, for fastening to the third wall (30).

6. Vehicle according to any one of Claims 1 to 5, **characterized in that** the reinforcement element (118) comprises a fastening point (132), which is situated on said fastening lug (121), for fastening to the first wall (7).

7. Vehicle according to any one of Claims 1 to 6, **characterized in that** each reinforcement element (118) is made of metal.

8. Vehicle according to any one of Claims 1 to 7, **characterized in that** the reinforcement element (118) is fastened to the first wall (7) and to the third wall (30) by spot welds (128, 129, 130, 131, 132).

9. Reinforcement element (118) for producing a vehicle according to any one of Claims 1 to 8, **characterized in that** it comprises a planar main body (120) extended by a planar fastening lug (121), which is inclined relative to said body (120), and **in that** said body (120) comprises a central rib (122), which is aligned with the fastening lug (121) and separates two parallel grooves (123, 124).
